# EUROPEAN PATENT SPECIFICATION

(11) **EP 1 489 572 B1**
(45) Date of publication and mention of the grant of the patent: **25.03.2015**
(21) Application number: 04013533.7
(22) Date of filing: 08.06.2004
(51) Int. Cl.: G08B 13/24, G06K 7/08

(54) **Wide exit electronic article surveillance antenna system**
Antennensystem mit verbreiteter Erfassung zur elektronischen Artikelüberwachung
Système d'antennes à couverture de sortie étendue pour la surveillance électronique d'articles.

(30) Priority: 16.06.2003 US 478944 P
(43) Date of publication of application: 22.12.2004
(73) Proprietor: Tyco Fire & Security GmbH, 8212 Neuhausen am Rheinfall (CH)
(72) Inventor: Copeland, Richard L., Lake Worth FL 33463 (US); Hall, Stewart E., Wellington FL 33414 (US); Farrell, William, West Palm Beach FL 33412 (US); Strzelec, Stanley, Delray Beach FL 33446 (US)
(74) Representative: Hafner, Dieter

(56) References cited:
- WO-A-97/38404
- DE-A- 4 109 840
- DE-A- 10 128 004
- GB-A- 2 280 089
- US-A- 3 500 373
- US-A- 3 697 996
- US-A- 4 134 538
- US-A- 4 308 530
- US-A- 5 459 451

## Description

### FIELD OF THE INVENTION

This invention relates to electronic article surveillance (EAS) systems and more particularly to an EAS antenna system adapted for environments having wide exits and entrances.

### BACKGROUND OF THE INVENTION

Electronic Article Surveillance (EAS) systems are detection systems that allow the identification of a marker or tag within a given detection region. EAS systems have many uses, but most often they are used as security systems for preventing shoplifting in stores or removal of property in office buildings. EAS systems come in many different forms and make use of a number of different technologies.

A typical EAS system includes an electronic detection unit, markers and/or tags, and a detacher or deactivator. The detection units can, for example, be formed as pedestal units, buried under floors, mounted on walls, or hung from ceilings. The detection units are usually placed in high traffic areas, such as entrances and exits of stores or office buildings. The markers and/or tags have special characteristics and are specifically designed to be affixed to or embedded in merchandise or other objects sought to be protected. When an active marker passes through a marker detection region, the EAS system sounds an alarm, a light is activated, and/or some other suitable alert devices are activated to indicate the removal of the marker from the prescribed area.

Common EAS systems operate with these same general principles using either transceivers, which each transmit and receive, or a separate transmitter and receiver. Typically the transmitter is placed on one side of the detection region and the receiver is placed on the opposite side of the detection region. The transmitter produces a predetermined excitation signal in a marker detection region. In the case of a retail store, this detection region is usually formed at a checkout aisle or an exit. When an EAS marker enters the detection region, the marker has a characteristic response to the excitation signal, which can be detected. For example, the marker may respond to the signal sent by the transmitter by using a simple semiconductor junction, a tuned circuit composed of an inductor and capacitor, soft magnetic strips or wires, or vibrating resonators. The receiver subsequently detects this characteristic response. By design, the characteristic response of the marker is distinctive and not likely to be created by natural circumstances.

EAS systems are often called upon for coverage of a large detection area, such as a wide mall store entrance. The mall store entrance can sometimes cover the width of the mall store itself. Such relatively large detection areas require special design considerations. For example, the EAS system used for coverage must be carefully designed to avoid any gaps through which a marker might pass through undetected, while simultaneously avoiding false alarming caused by markers attached to store inventory which may be displayed near the detection region.

When conventional EAS antenna systems, typically formed of loop antennas, are used in openings wider than about 2.0 meters, detection performance begins to deteriorate. Wide mall store entrances may need detection areas up to about 6 meters wide. As used herein, wide exits and wide entrances refer to exits/entrances having widths greater than or equal to about 2.0 meters. Attempts at solutions to the wide entrance environment include adding additional antennas in the floor and/or ceiling. Adding loop antennas in existing flooring causes many problems, as the floor must be torn up in order to install the loop antenna.

US 5,459,451 discloses an electronic article surveillance system for detecting articles carrying or containing magnetically responsive markers. The system comprises a transmitting antenna in form of a large perimeter loop antenna adapted to extend around the perimeter of a passageway through which the articles are passed, and one or more receiving antenna units, which detect the electro-magnetic response of the markers to an interrogating electro-magnetic field generated by the transmitting antenna.

GB 2 280 089 discloses a system for the reception of signals from a passive transponder. In the system, an antenna for transmitting a first signal to a passive transponder having a first frequency and receiving a second signal from said passive transponder having a second frequency, which antenna comprises a ferrite rod and receiving coil means for receiving said signal from a passive transponder. Said receiving coil means being tuned to resonate at said second frequency.

DE 101 28 004 A1 discloses inductive electronic component comprising a soft-magnetic core. The core is consisting of powder compound produced by mixing a ferromagnetic amorphous or nanocrystalline powder with a ferromagnetic dielectric powder as well as a thermoplastic or duroplastic polymer.

WO 97/38404 A discloses an electronic article surveillance antenna system which is adapted to operate at very high frequencies, such as about 8 MHz. The EAS system has an arrangement of transmitter and receiver antennas each lying in a flat, horizontal plane in substantial alignment, with the receiver antenna positioned at the floor of a passageway and the transmitter antenna positioned overhead.

DE 41 09 840 A1 discloses a receiver antenna for long wave or very long wave applications comprising a coil on a core, which core consisting of an amorphous soft-magnetic alloy. Two of said core receiver antennas are orthogonally disposed to each other and form a pair, the coils of each of said core antennas are connected separately to a transceiver.

### SUMMARY OF THE INVENTION

According to the invention, there is provided an electronic article surveillance antenna system comprising: at least one transmit antenna connectable to a transmitter for generation of an interrogation signal for transmission into a passageway; and at least one receiver antenna adapted for installation within a region of a floor of the passageway for receiving of a response signal from an electronic article surveillance tag disposed in the passageway, said response signal responsive to said interrogation signal, wherein said receiver antenna comprising a plurality of pairs of amorphous core receiver antennas, wherein first and second ones of said plurality of amorphous core receiver antennas are orthogonally disposed to each other forming said pairs, wherein each orthogonal pair of amorphous core receiver antennas are summed electrically and forms one channel input. Further aspects of the invention are contained in dependent claims 2-11.

### BRIEF DESCRIPTION OF THE DRAWINGS

For a better understanding of the present invention, together with other objects, features and advantages, reference should be made to the following detailed description which should be read in conjunction with the following figures wherein like numerals represent like parts:
FIG. 1 is a top perspective view of an amorphous core receiver antenna used with the present invention.
FIG. 2 is a perspective view of one implementation of array of receiver antennas of FIG. 1.
FIG. 3 is a top perspective view of a large amorphous core receiver antenna used with the present invention.
FIG. 4 is a top perspective view of a large ferrite core transmitter antenna used with the present invention.
FIG. 5 is a schematic representation of one embodiment of the present invention.
FIGS. 6-8 are plots of the EAS tag pick rate for the embodiment of FIG. 5 for a 14-foot wide by 10-foot high entrance.
FIGS. 9-11 are plots of the EAS tag pick rate for the embodiment of FIG. 5 for an 18-foot wide by 10-foot high entrance.
FIG. 12 is a schematic representation of a second embodiment of the present invention.
FIGS. 13-15 are plots of the EAS tag pick rate for the embodiment of FIG. 12 for a 14-foot wide by 10-foot high entrance.
FIGS. 16-18 are plots of the EAS tag pick rate for the embodiment of FIG. 12 for an 18-foot wide by 10-foot high entrance.

### DETAILED DESCRIPTION

For simplicity and ease of explanation, the present invention will be described herein in connection with various exemplary embodiments thereof. Those skilled in the art will recognize, however, that the features and advantages of the present invention may be implemented in a variety of configurations. It is to be understood, therefore, that the embodiments described herein are presented by way of illustration, not of limitation.

It has been discovered that an amorphous core receiver antenna is significantly more sensitive compared to traditional loop antennas and ferrite core receiver antennas. In fact, an amorphous core receiver antenna has a higher sensitivity over the ferrite antenna by a factor of 10-20 per unit volume of core material. This discovery led to the invention of the core transceiver antenna, U.S. Patent Publication No. 2003/0117282, filed on December 21, 2001.

It has also been determined that a very small and thin core receiver antenna may be made to fit inside of the grout region in tile floors, or be easily mounted under the tile in the floor. An array of such receiver antennas may be used as a receiver antenna array for very wide detection systems. In addition to the small floor-mounted core receiver antennas, larger core receiver antennas can be used on the ceiling and/or sidewalls of the entrance zone if the floor installation was not desired. Either traditional loop transmitter antennas or core transmitter antennas could comprise the excitation field source for such a wide detection system.

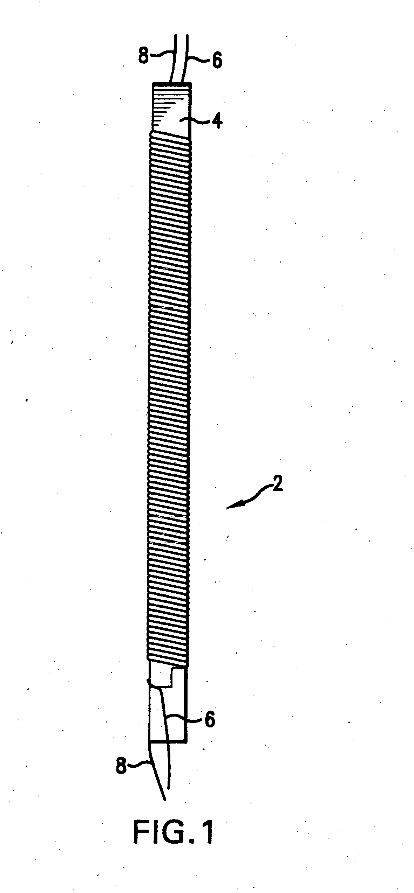

Referring to FIG. 1, amorphous core receiver antenna 2 is illustrated, which is sized to fit into the grout region of a conventional tile floor. Core receiver antenna 2 consists of about 30 layers of a suitable amorphous ribbon 4, such as VC6025F available from Vacuumschmelze GmBH Co. (D-6450 Hanau, Germany), or other amorphous alloy with similar magnetic properties. Each amorphous ribbon is of approximate dimension of 1 cm. wide by 20 cm. long, and is coated with a thin insulating layer. The coating on each ribbon is sufficient to electrically isolate all layers to prevent eddy current losses. A thin dielectric layer is then placed around the core and an electrical winding 6 is placed surrounding the core. Typically, winding 6 is capacitively resonated to form a resonant R, L, and C series circuit. A secondary winding 8 is then placed over the first to allow an electrically isolated output, which can be cabled into a conventional electronic article surveillance receiver input. Preferably, the primary winding 6 and secondary winding 8 should be over the middle 75% of the core.

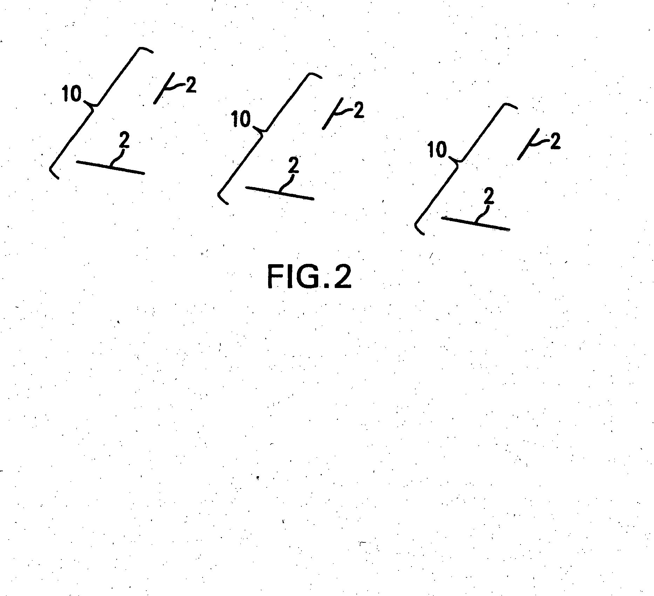

Referring to FIG. 2, a layout of a small array of core receiver antennas 2 mounted on the floor is illustrated. Two core receiver antennas 2 form an orthogonal pair 10. Three orthogonal pairs 10 are shown, but fewer or more pairs can be implemented in a particular installation depending on the width of the entrance/exit. Each orthogonal pair 10 of receiver core antennas 2 are summed electrically and forms one channel input. Orthogonal pairs 10 are summed rather than parallel pairs to improve noise immunity. If noise were mainly coming from one direction, summing in an orthogonal manner will yield improved signal/noise ratio.

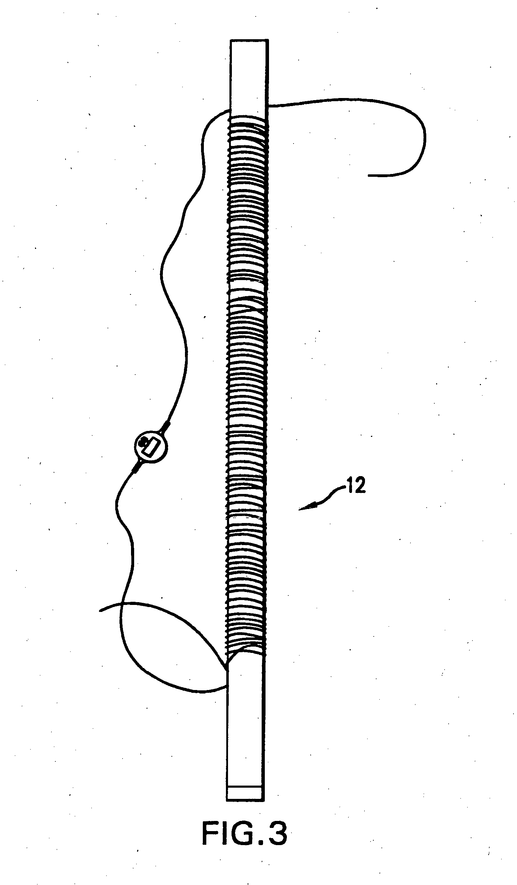

Referring to FIG. 3, large amorphous core receiver antenna 12 is very similar to amorphous core receiver antenna 2, described above. A typical overall size of antenna 12 is about 75 cm. long by 2 cm. wide by about 30 ribbons thick. In some installations it may not be possible to use small core receiver antennas 2 installed in the floor, as shown in FIG. 2. Alternatively, an array of larger core receiver antennas 12 may be placed overhead on, or above the ceiling, and/or on the sidewalls of the entrance zone of the store.

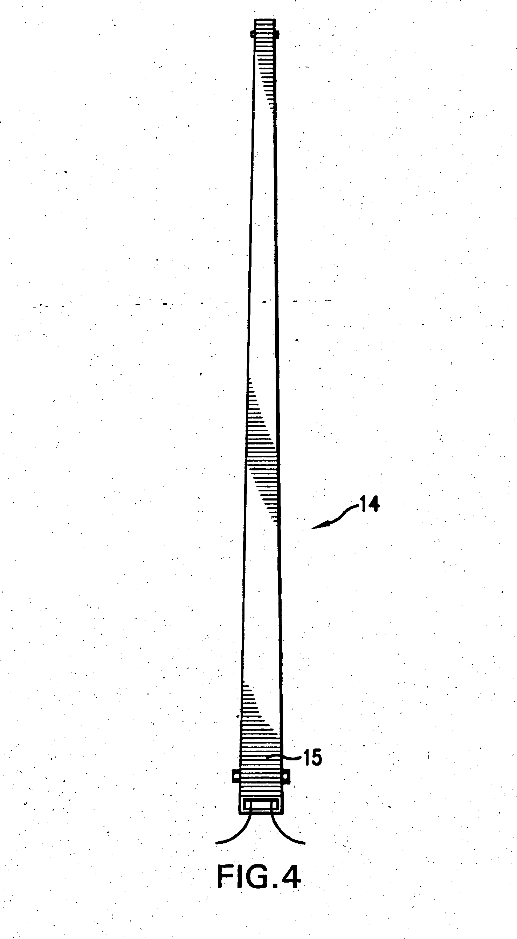

Referring to FIG. 4 magnetic core transmit antenna 14, which includes a long ferrite or magnetic material core with excitation windings, is illustrated. In one embodiment, a plurality of ferrite blocks, each about 1 inch wide by 0.5 inch high and 3 inches long, is glued together to form a closely bound chain. Suitable ferrite blocks are Phillips 3C90 soft ferrite blocks. A plastic, or similar, housing 15 encloses and protects the ferrite core. Additional magnetic core configurations and construction methods are disclosed in commonly owned U.S. Patent No. 7209090, the teachings of which are not comprised in the state of the art. An array of windings connected in series/parallel combinations is employed to maximize the power transfer from the electronics into the ferrite core, thus maximizing the field distribution. The ferrite core transmit antenna 14 is a much smaller profile than a conventional loop transmit antenna.

Any of the core antennas described herein may also be constructed from a nanocrystalline material, as described in U.S. Patent Publication No. 2005/134515, the disclosure of which is not comprised in the state of the art. A nanocrystalline core antenna may include a plurality of ribbons of nanocrystalline material laminated together with suitable insulation coatings. As will be recognized by those skilled in the art, nanocrystalline material begins in an amorphous state achieved through rapid solidification techniques. After casting, while the material is still very ductile, a suitable coating such as SiO₂ may be applied to the material. This coating remains effective after annealing and prevents eddy currents in the laminate core. The material may be cut to a desired shape and bulk annealed to form the nanocrystalline state. The resulting nanocrystalline material exhibits excellent high frequency behavior up to the RF range, and is characterized by constituent grain sizes in the nanometer range. The term "nanocrystalline material" as used herein refers to material including grains having a maximum dimension less than or equal to 40nm. Some materials have a maximum dimension in a range from about 10nm to 40nm.

Exemplary nanocrystalline materials useful in a nanocrystalline core antenna include alloys such as FeCuNbSiB, FeZrNbCu, and FeCoZrBCu. These alloys are commercially available under the names FINEMET, NANOPERM, and HITPERM, respectively. The insulation material may be any suitable material that can withstand the annealing conditions, since it is preferable to coat the material before annealing. Epoxy may be used for bonding the lamination stack after the material is annealed. This also provides mechanical rigidity to the core assembly, thus preventing mechanical deformation or fracture. Alternatively, the nanocrystalline stack may be placed in a rigid plastic housing.

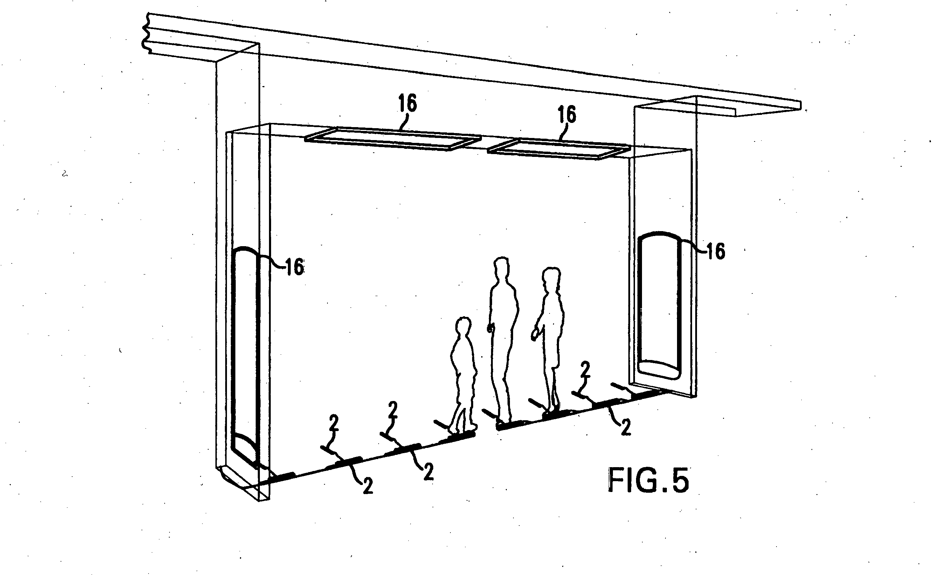

Referring to FIG. 5, a wide store entrance with an array of conventional loop antennas 16 is illustrated. Two loop antennas 16 are shown overhead and one on each sidewall. An array of small core receiver antennas 2 are mounted in the floor. Testing using a conventional magnetomechanical EAS system resulted in an overall pick rate of 97% with the configuration shown in FIG. 5 in an entrance with dimensions of 14 feet wide and 10 feet high.

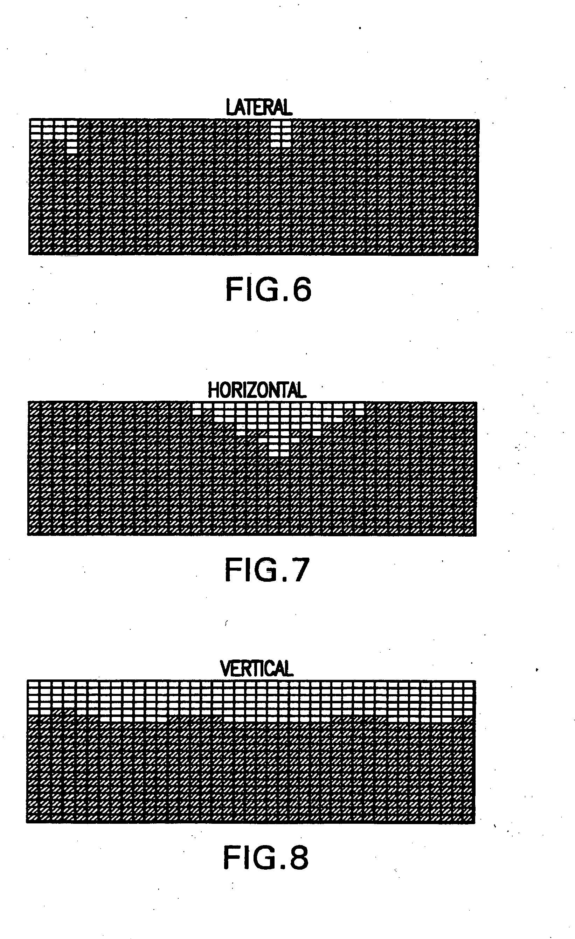

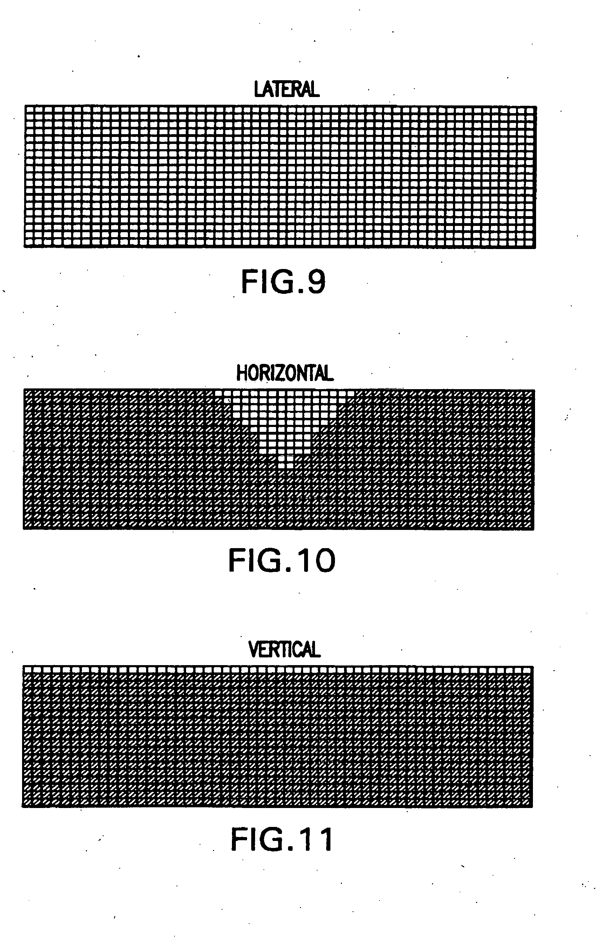

Referring to FIGS. 6-8, the results of the above-mentioned performance test in a 14-foot wide by 10-foot high entrance are shown for an EAS tag in the lateral, horizontal, and vertical orientations, respectively, wherein the dimensions of the plots in each of FIGS. 6-8 correspond to the height and width dimensions of the tested exit area. The pick rate is an indication of system performance and indicates how well the system can detect an EAS tag in the surveillance zone of the store entrance formed by the antenna configuration. It is the probability of tag detection. The shaded area of each figure shows detection of an EAS tag. In the examples below the pick rate is determined in the region extending from 0 to about 150 centimeters above the floor. Referring to FIGS. 9-11, the results of a similar test to the above-mentioned performance test for an 18-foot wide by 10-foot high entrance are shown for the lateral, horizontal, and vertical orientations, respectively, with an overall pick of 94%.

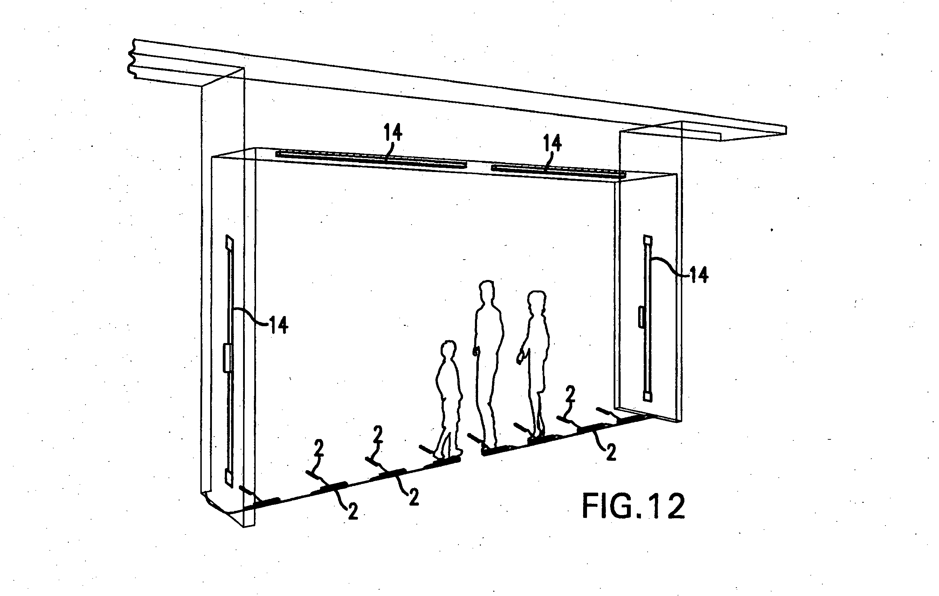

Referring to FIG. 12, a wide store entrance with an array of ferrite transmit antennas 14 is illustrated. Two ferrite transmit antennas 14 are mounted in or on the ceiling, and one on each sidewall. An array of small core receiver antennas 2 are mounted in the floor. Although a specific antenna configuration is illustrated in FIG. 12, the core antennas may be provided in a variety of configurations, including, for example, the configurations disclosed in commonly owned U.S. Patent No. 7209090. Testing using a conventional magnetomechanical EAS system resulted in an overall pick rate of 94% with the configuration shown in FIG. 12 in an entrance with dimensions of 14 feet wide and 10 feet high.

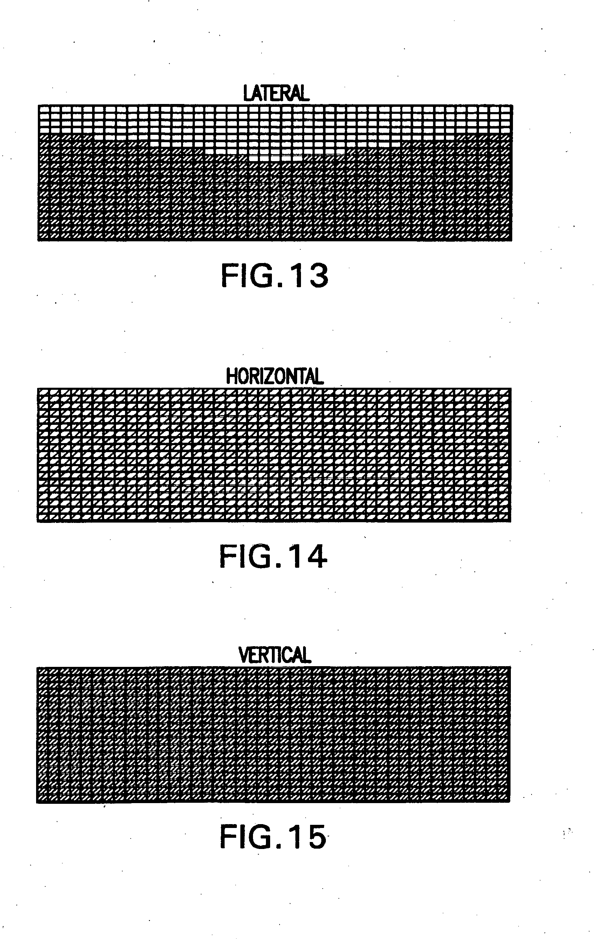

Referring to FIGS. 13-15, the results of the above-mentioned performance test for the configuration shown in FIG. 12 in a 14-foot wide by 10-foot high entrance are shown for the lateral, horizontal, and vertical orientations, respectively.

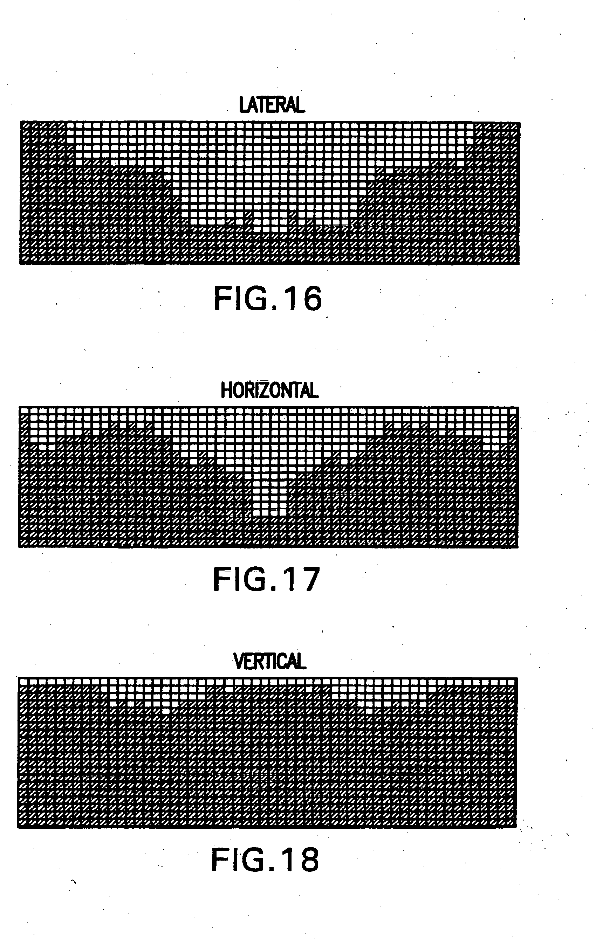

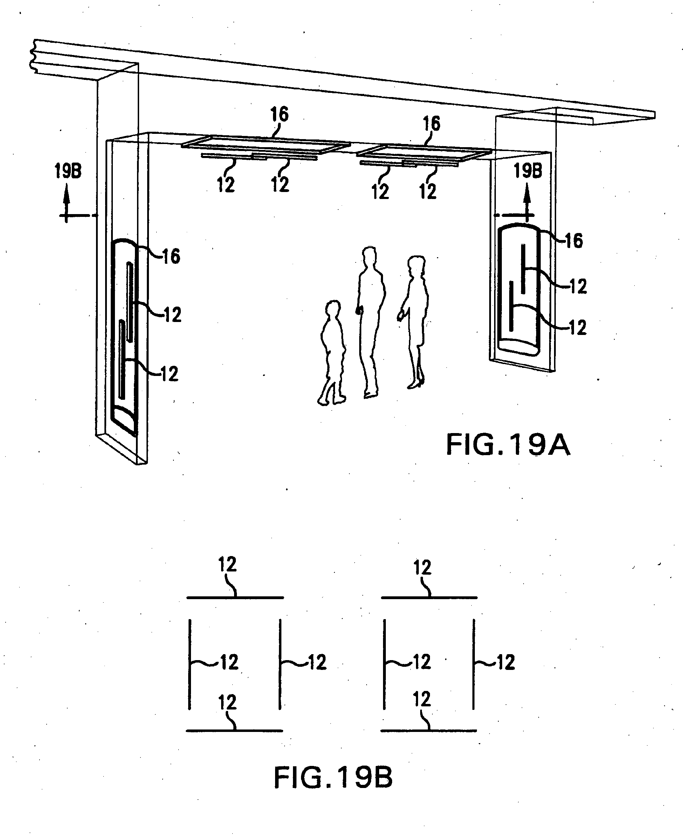

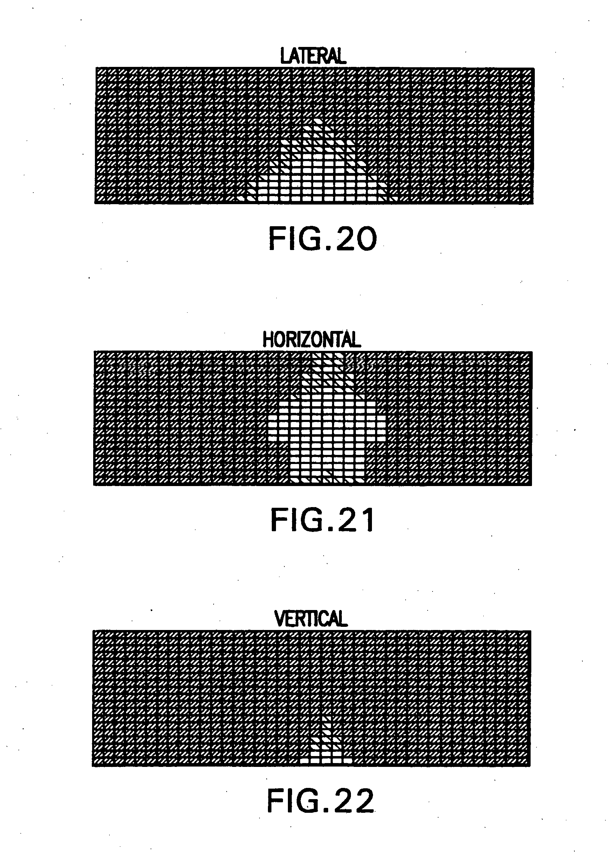

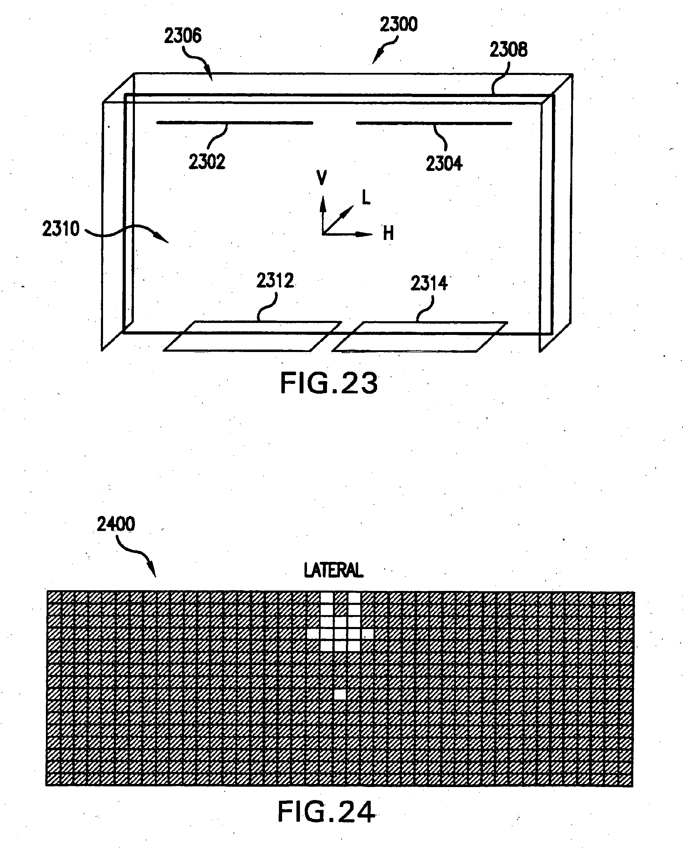

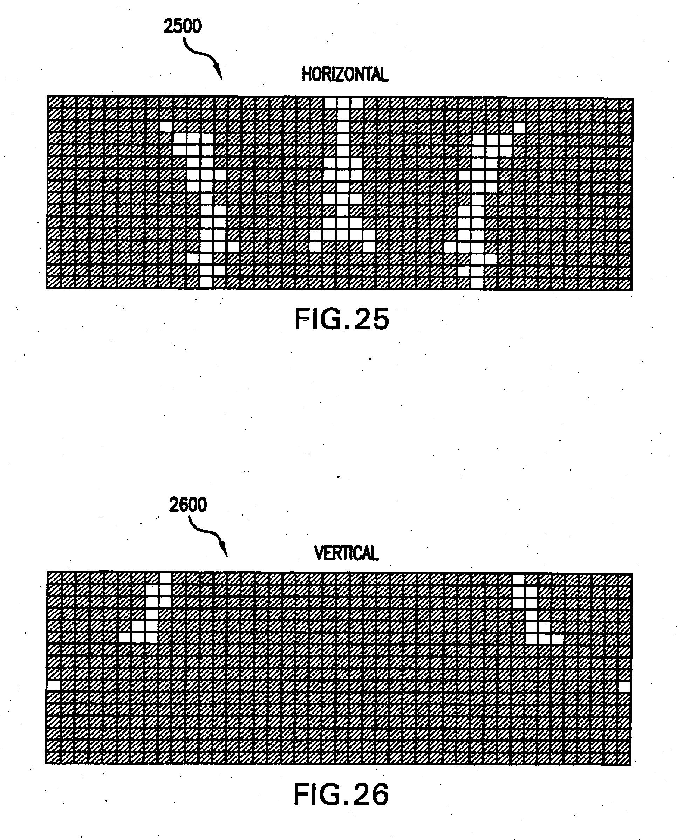

Referring to FIGS. 16-18, the results of a similar test to the above-mentioned performance test in an 18-foot wide by 10-foot high entrance are shown for the lateral, horizontal, and vertical orientations, respectively, with an overall pick of 83%.

It is to be understood that variations and modifications of the present invention can be made without departing from the scope of the invention. It is also to be understood that the scope of the invention is not to be interpreted as limited to the specific embodiments disclosed herein, but only in accordance with the appended claims when read in light of the forgoing disclosure.

## Claims

1. An electronic article surveillance antenna system comprising:
at least one transmit antenna (14) connectable to a transmitter for generation of an interrogation signal for transmission into a passageway; and
at least one receiver antenna (2) adapted for installation within a region of a floor of the passageway for receiving of a response signal from an electronic article surveillance tag disposed in the passageway, said response signal responsive to said interrogation signal,
**characterized in that**
said receiver antenna (2) comprising a plurality of pairs (10) of amorphous core receiver antennas, wherein first and second ones of said plurality of amorphous core receiver antennas are orthogonally disposed to each other forming said pairs (10) and wherein each orthogonal pair (10) of amorphous core receiver antennas (2) are summed electrically and forms one channel input.

2. The system of claim 1, wherein said at least one transmit antenna (14) is a loop antenna.

3. The system of claim 1, wherein said at least one amorphous core antenna (2) is a magnetic core antenna.

4. The system of claim 1, wherein said amorphous core antennas (2) comprise a nanocrystalline material.

5. The system of claim 2, wherein said at least transmit antenna (14) is a perimeter loop antenna adapted to extend around an entire perimeter of a passageway, said perimeter loop antenna configured as a transmitter antenna for generating an interrogation signal in said passageway.

6. The system of claim 1, wherein the at least one transmit antenna or at least one of the amorphous core receiver antennas is a ceiling antenna adapted for installation adjacent a ceiling of said passageway.

7. The system of claim 6, said wherein said at least one ceiling antenna (14) comprises a nanocrystalline material.

8. The system of claim 6, said system comprising first and second ones of said ceiling core antennas (14).

9. The system of claim 1, said system further comprising at least one core receiver antenna (14) adapted for installation adjacent at least one side of said passageway.

10. The system of claim 9, said wherein said at least one core receiver antenna (16) comprises a nanocrystalline material.

11. The system of claim 1, said system further comprising at least one first core receiver antenna (14) adapted for installation adjacent at least a first side of said passageway, and at least one second core receiver antenna (14) adapted for installation adjacent a second side of said passageway.

## Patentansprüche

1. Antennensystem zur Überwachung von elektronischen Artikeln, umfassend:
mindestens eine Sendeantenne (14), die mit einem Sender zur Erzeugung eines Abfragesignals zum Senden in einen Durchgang verbunden werden kann; und
mindestens eine Empfangsantenne (2), die zur Installation in einem Fußbodenbereich des Durchgangs zum Empfangen eines Reaktionssignals von einem Überwachungstag des elektronischen Artikels ausgelegt ist, welches im Durchgang angeordnet ist, wobei das Reaktionssignal auf das Abfragesignal reagiert,
**dadurch gekennzeichnet, dass**
die Empfangsantenne (2) mehrere Paare (10) von amorphen Kernempfangsantennen umfasst, wobei die erste und zweite der mehreren amorphen Kernempfangsantennen orthogonal zueinander angeordnet sind, wobei sie die Paare (10) bilden, und wobei jedes orthogonale Paar (10) der amorphen Kernempfangsantennen (2) elektrisch aufsummiert wird und einen Kanaleingang bildet.

2. System nach Anspruch 1, wobei die mindestens eine Sendeantenne (14) eine Rahmenantenne ist.

3. System nach Anspruch 1, wobei die mindestens eine amorphe Kernantenne (2) eine Antenne mit Magnetkern ist.

4. System nach Anspruch 1, wobei die amorphen Kernantennen (2) ein nanokristallines Material umfassen.

5. System nach Anspruch 2, wobei die mindestens eine Sendeantenne (14) eine Umfangsrahmenantenne ist, die dazu ausgelegt ist, sich um einen ganzen Umfang eines Durchgangs zu erstrecken, wobei die Umfängsrahmenantenne als Sendeantenne zum Erzeugen eines Abfragesignals im Durchgang konfiguriert ist.

6. System nach Anspruch 1, wobei die mindestens eine Sendeantenne oder mindestens eine der amorphen Kernempfangsantennen eine Deckenantenne ist, die zur Installation angrenzend an eine Decke des Durchgangs ausgelegt ist.

7. System nach Anspruch 6, wobei die mindestens eine Deckenantenne (14) ein nanokristallines Material umfasst.

8. System nach Anspruch 6, wobei das System erste und zweite der Deckenkernantennen (14) umfasst.

9. System nach Anspruch 1, wobei das System ferner mindestens eine Kernempfangsantenne (14) umfasst, die zur Installation anliegend an mindestens eine Seite des Durchgangs ausgelegt ist.

10. System nach Anspruch 9, wobei die mindestens eine Kernempfangsantenne (16) ein nanokristallines Material umfasst.

11. System nach Anspruch 1, wobei das System ferner mindestens eine erste Kernempfangsantenne (14), die zur Installation anliegend an eine erste Seite des Durchgangs ausgelegt ist, und mindestens eine zweite Kernempfangsantenne (14) umfasst, die zur Installation anliegend an eine zweite Seite des Durchgangs ausgelegt ist.

## Revendications

1. Système d'antennes de surveillance électronique d'articles comprenant :
au moins une antenne émettrice (14) connectable à un émetteur pour production d'un signal d'interrogation pour transmission dans un passage ; et
au moins une antenne réceptrice (2) adaptée pour une installation à l'intérieur d'une région d'un sol du passage pour réception d'un signal de réponse d'une étiquette de surveillance électronique d'articles disposée dans le passage, ledit signal de réponse étant sensible audit signal d'interrogation,
**caractérisé en ce que**
ladite antenne réceptrice (2) comprend une pluralité de paires (10) d'antennes réceptrices en ferrite amorphe, des premières et des deuxièmes de ladite pluralité d'antennes réceptrices en ferrite amorphe étant disposées orthogonalement les unes aux autres, formant lesdites paires (10), et chaque paire orthogonale (10) d'antennes réceptrices en ferrite amorphe (2) étant sommée électriquement et formant une entrée de canal.

2. Système selon la revendication 1, dans lequel ladite au moins une antenne émettrice (14) est une antenne cadre.

3. Système selon la revendication 1, dans lequel ladite au moins une antenne en ferrite amorphe (2) est une antenne en ferrite magnétique.

4. Système selon la revendication 1, dans lequel lesdites antennes en ferrite amorphe (2) comprennent un matériau nanocristallin.

5. Système selon la revendication 2, dans lequel ladite au moins une antenne émettrice (14) est une antenne cadre périmétrique adaptée pour s'étendre autour d'un périmètre entier d'un passage, ladite antenne cadre périmétrique étant configurée comme une antenne émettrice pour générer un signal d'interrogation dans ledit passage.

6. Système selon la revendication 1, dans lequel l'au moins une antenne émettrice ou au moins une des antennes réceptrices en ferrite amorphe est une antenne de plafond adaptée pour une installation au voisinage d'un plafond dudit passage.

7. Système selon la revendication 6, dans lequel ladite au moins une antenne de plafond (14) comprend un matériau nanocristallin.

8. Système selon la revendication 6, ledit système comprenant des premières et des deuxièmes desdites antennes de plafond en ferrite (14).

9. Système selon la revendication 1, ledit système comprenant en outre au moins une antenne réceptrice en ferrite (14) adaptée pour une installation au voisinage d'au moins un côté dudit passage.

10. Système selon la revendication 9, dans lequel ladite au moins une antenne réceptrice en ferrite (16) comprend un matériau nanocristallin.

11. Système selon la revendication 1, ledit système comprenant en outre au moins une première antenne réceptrice en ferrite (14) adaptée pour une installation au voisinage d'au moins un premier côté dudit passage, et au moins une deuxième antenne réceptrice en ferrite (14) adaptée pour une installation au voisinage d'un deuxième côté dudit passage.
